# EUROPEAN PATENT APPLICATION

(11) **EP 4 596 788 A1**
(43) Date of publication of application: **06.08.2025**
(21) Application number: 22959736.4
(22) Date of filing: 26.09.2022
(51) Int. Cl.: D21J 5/00, D21J 3/00, B29C 70/28

(54) **FORMING PROCESS CAPABLE OF MANUFACTURING PAPER-PLASTIC PRODUCTS OF DIFFERENT THICKNESSES**

(71) Applicant: Changzhou City Cheng Xin Environmental Protection Technology Co., Ltd, Changzhou, Jiangsu 213300 (CN)
(72) Inventor: LAI, Tzung Shen, hangzhou, Jiangsu 213300 (CN)
(74) Representative: Lang, Christian
(86) International application number: PCT/CN2022/121303
(87) International publication number: WO 2024/065084

(57) **Abstract**

The present invention relates to a forming process capable of manufacturing paper-plastic products of different thicknesses. According to the process, a programmable logic controller is used to control a mold (1) driving device to generate a pulp suction time period difference, thereby forming wet blanks having different thickness parts, or the rising speed for a mold (1) to be separated from a pulp tank (30) is controlled to generate wet blanks having different thicknesses, or an angle difference of an overturning forming machine is controlled to achieve different thicknesses of a same wet blank (2) in different areas, i.e., different thicknesses of the same wet blank (2) in different areas or local parts can be achieved by using different forms of forming machines and programmable logic controllers capable of controlling time and angles.

## Description

### TECHNICAL FIELD

The present invention relates to a forming process, and more particularly to the forming process which is capable of manufacturing paper-plastic products of different thicknesses, and a programmable logic controller is used to control a mold driving device to generate a pulp suction time period difference, thereby forming wet blanks having different thickness parts, or the rising speed for a mold to be separated from a pulp tank is controlled to generate wet blanks having different thicknesses.

### BACKGROUND

As the applications of paper-plastic products become wider and wider, the requirements for paper plastics are getting higher and higher. Every paper-plastic industry is moving towards the research and development of paper-plastic products to replace plastic products, thus make paper-plastic cups as good as plastic cups. Like a plastic cup, the paper-plastic cup can deform less and is not soften easily. Also, the paper-plastic packaging can bear more weight and is thicker and harder. However, due to the influence of the characteristics of plant fibers as raw materials for paper and plastics, it is difficult to make paper and plastic products with high strength and high shaping capacity. It can only increase the density or arrangement of the vacuum suction holes in the mold to allow the wet blanks to absorb more plant fibers. But, such a method requires multiple tests and modifications to achieve the set reasonable thickness and strength, thus causing a production inconvenient. In addition, a vacuum cavity of the mold is directly divided into multiple non-communicated areas to increase vacuum suction in the areas which are thickened, thus increasing the mold cost and tests to achieve the set thickness and reinforcement.

The present invention has arisen to mitigate and/or obviate the aforedescribed disadvantages.

### SUMMARY

The primary aspect of the present invention is to provide a forming process capable of manufacturing paper-plastic products of different thicknesses by which a programmable logic controller is used to control a mold driving device to generate a pulp suction time period difference, thereby forming wet blanks having different thickness parts, or the rising speed for a mold to be separated from a pulp tank is controlled to generate wet blanks having different thicknesses, or an angle difference of an overturning forming machine is controlled to achieve different thicknesses of a same wet blank in different areas, i.e., different thicknesses of the same wet blank in different areas or local parts can be achieved by using different forms of forming machines and programmable logic controllers capable of controlling time and angles.

A forming process capable of manufacturing paper-plastic products of different thicknesses is configured to suck pulps by using a forming machine, a programmable logic controller (PLC) is used to control a mold of the forming machine to suck plant-fiber pulps in a pulp suction time period difference, when the mold stays in a pulp tank, a rising speed for the mold which is separated from the pulp tank, and a tilted angle difference of the mold. Plant fibers of the plant-fiber pulps are intersected and stacked to achieve different thicknesses of a same wet blank in different areas or portions of the same wet blank.

The forming machine for pulp suction is a reciprocate molding machine or an overturning forming machine.

After the forming machine drives the mold to suck pulps and generate the wet blank, the PLC controls the mold to lift slowly so that the wet blank removed from the pulp tank is sucked by a vacuum suction force to contact with the mold matingly. A part of the wet blanks removed from the pulp tank is maintained in a predetermined thickness, and the other part of the wet blank is sucked by the vacuum suction force, the plant-fiber pulps are sucked in a predetermined time; after finishing a pulp suction, the wet blank has a first thickness formed on the part thereof, and the wet blank has a second thickness formed in the other part thereof, the second thickness is thicker than the first thickness, the plant fibers of the plant-fiber pulps are intersected and staked so as to obtain the second thickness; after a hot-press molding, the wet blank has different thickness, and the different thickness are the first thickness and the second thickness, the second thickness of the wet blank facilitates a reinforcement of a finished paper-plastic product which is a cup, a product with a higher height and a deeper depth or the paper-plastic product with a reinforced end.

After the forming machine drives the mold to suck pulps and generate the wet blank, the PLC controls the mold to lift and stop in a predetermined distance so that a part of the wet blank not removed from the pulp tank is sucked by a vacuum suction force to adhere with the plant-fiber pulps, the plant fibers of the plant-fiber pulps are intersected and staked so as to obtain a second thickness; in a hot-press molding, the wet blank is clamped by an upper mold and a lower mold so as to obtain two different thicknesses applicable for various paper-plastic products of a predetermined depth or height, the various paper-plastic products are any one of a cup body, a cup lid, an egg tray, and an industrial packaging box.

After the overturning forming machine drives the mold to suck pulps and generate the wet blank, the PLC controls the mold to rotate to a set angle, a part of the wet blank in the pulp tank is sucked by a vacuum suction force continuously to adhere with the plant-fiber pulps, and the plant fibers of the plant-fiber pulps are intersected and staked so as to obtain a second thickness, then the wet blank is hot-press molded so as to obtain a first thickness and the second thickness thicker than the first thickness, thus producing a finished paper-plastic product of different thicknesses. The second thickness facilitates a reinforcement of the finished paper-plastic product and is applicable for industrial packaging box.

Thereby, the forming machine is provided with the PLC to control the pulp suction time period difference of the mold, the rising speed for the mold to be separated from the pulp tank, or the angle difference of the mold, thus achieving different thicknesses of the wet blank. Also, the forming machine is not classified.

### BRIEF DESCRIPTION OF THE DRAWINGS

FIG. 1 is a cross sectional view showing the operation of a forming process capable of manufacturing paper-plastic products of different thicknesses according to a first embodiment of the present invention.
FIG. 2 is a cross sectional view showing the assembly of a wet blank made by the forming process capable of manufacturing paper-plastic products of different thicknesses according to the first embodiment of the present invention.
FIG. 3 is a cross sectional view showing the operation of a forming process capable of manufacturing paper-plastic products of different thicknesses according to a second embodiment of the present invention.
FIG. 4 is a cross sectional view showing the assembly of a wet blank made by the forming process capable of manufacturing paper-plastic products of different thicknesses according to the second embodiment of the present invention.
FIG. 5 is a cross sectional view showing the operation of a forming process capable of manufacturing paper-plastic products of different thicknesses according to a third embodiment of the present invention.
FIG. 6 is another cross sectional view showing the operation of the forming process capable of manufacturing paper-plastic products of different thicknesses according to the third embodiment of the present invention.
FIG. 7 is a cross sectional view showing the assembly of the wet blank made by the forming process capable of manufacturing paper-plastic products of different thicknesses according to the third embodiment of the present invention.

### REFERENCE NUMERAL

| | | | |
|---|---|---|---|
| 1 | mold | 10 | vacuum suction force |
| 2 | wet blank | 30 | pulp tank |
| 3 | plant-fiber pulps | A | first thickness |
| B | second thickness | 40 | vacuum suction force |
| 5 | wet blank | | |

### DETAILED DESCRIPTION

A forming process capable of manufacturing paper-plastic products of different thicknesses according to a preferred embodiment of the present invention is configured to suck pulps by using a forming machine, wherein a programmable logic controller (PLC) is used to control a mold 1 to suck plant-fiber pulps 3 in a pulp suction time period difference, when the mold 1 stays in a pulp tank 30, a rising speed for the mold 1 which is separated from the pulp tank 30, and a tilted angle difference of the mold 1, wherein the forming machine for pulp suction is any one of a reciprocate molding machine, an overturning forming machine, and other molding machines, wherein plant fibers of the plant-fiber pulps 3 are intersected and stacked to achieve different thicknesses of a same wet blank 2 in different areas or portions of the same wet blank 2.

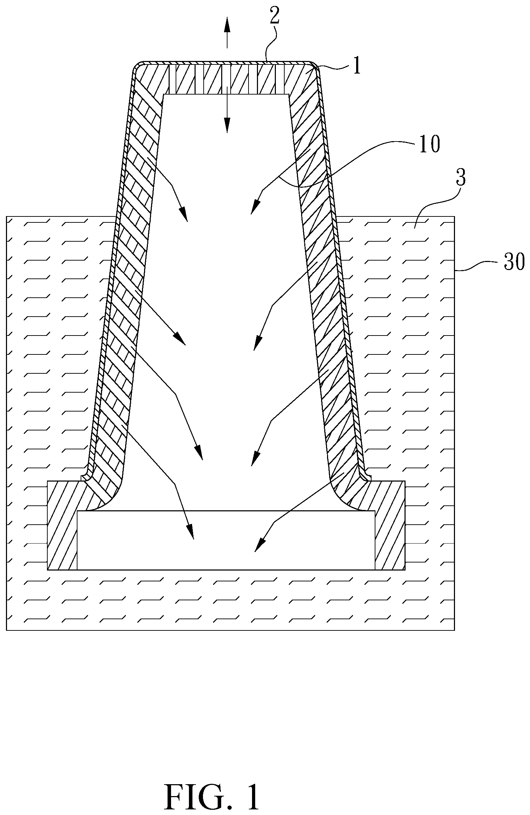

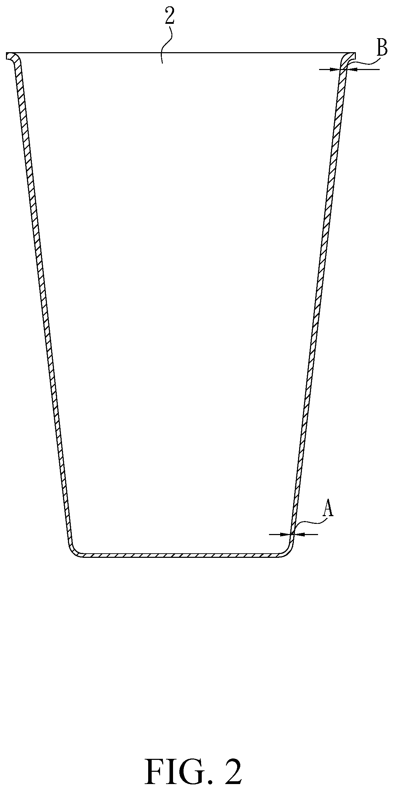

With reference to FIGS. 1 and 2, in a first embodiment, after the forming machine drives the mold 1 to suck pulps and generate the wet blank 2, the PLC controls the mold 1 to lift slowly so that the wet blank 2 removed from the pulp tank 30 is sucked by a vacuum suction force 10 to contact with the mold 1 matingly, wherein a part of the wet blanks 2 removed from the pulp tank 30 is maintained in a predetermined thickness, the other part of the wet blank 30 is sucked by the vacuum suction force 10, and the plant-fiber pulps 3 are sucked in a predetermined time. After finishing a pulp suction, the wet blank 2 has a first thickness A formed on the part thereof, and the wet blank 2 has a second thickness B formed in the other part thereof and the second thickness B is thicker than the first thickness A, then the plant fibers are intersected and staked so as to obtain the second thickness B. After a hot-press molding, the wet blank 2 has different thickness, for example, the second thickness B facilitates a reinforcement of a finished paper-plastic product, such as a cup, a product with a higher height and a deeper depth or the paper-plastic product with a reinforced end, as shown in FIG. 2.

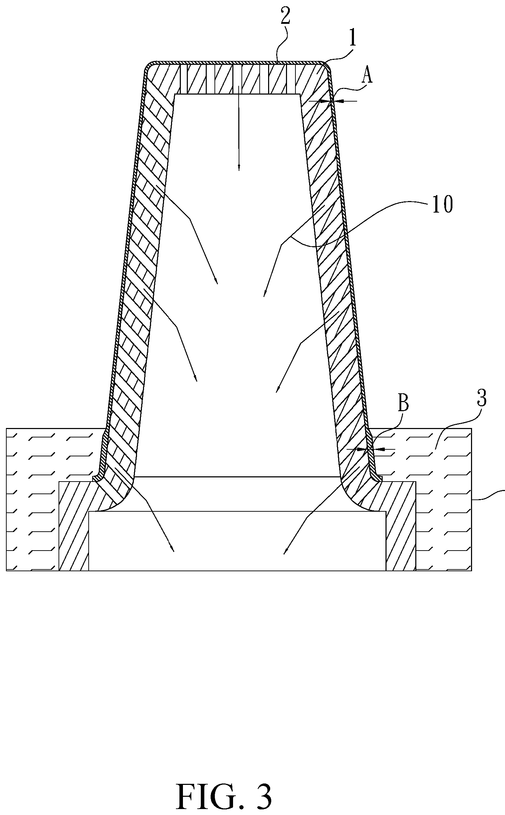

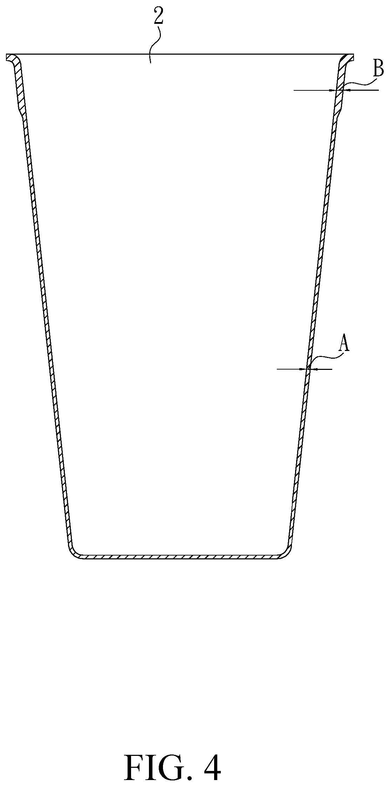

In a second embodiment, as illustrated in FIGS. 3 and 4, after the forming machine drives the mold 1 to suck pulps and generate a wet blank 2, the PLC controls the mold 1 to lift and stop in a predetermined distance so that a part of the wet blank 2 not removed from the pulp tank 30 is sucked by a vacuum suction force 10 to adhere with the plant-fiber pulps 3, wherein the plant fibers are intersected and staked so as to obtain a second thickness B. In a hot-press molding, the wet blank 2 is clamped by an upper mold and a lower mold so as to obtain two different thicknesses applicable for various paper-plastic products of a predetermined depth or height, wherein the various paper-plastic products are any one of a cup body, a cup lid, an egg tray, and an industrial packaging box.

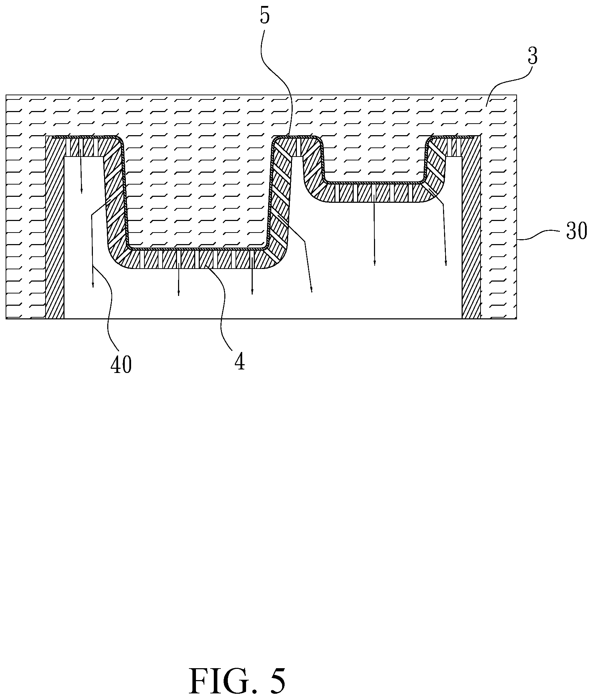

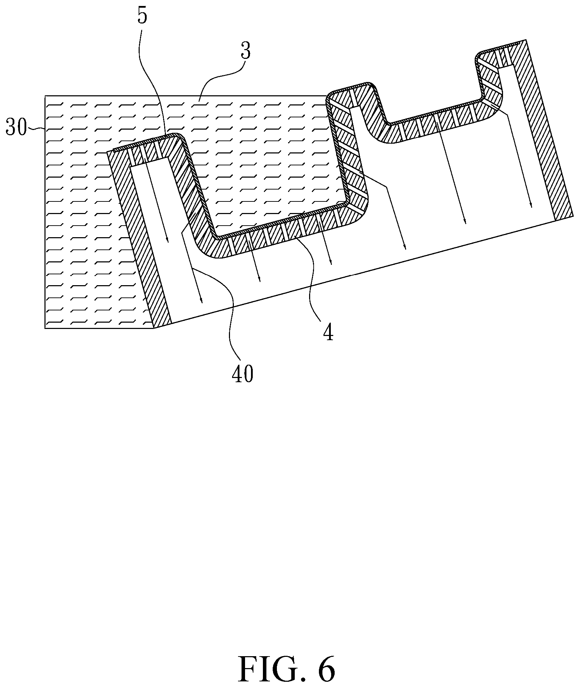

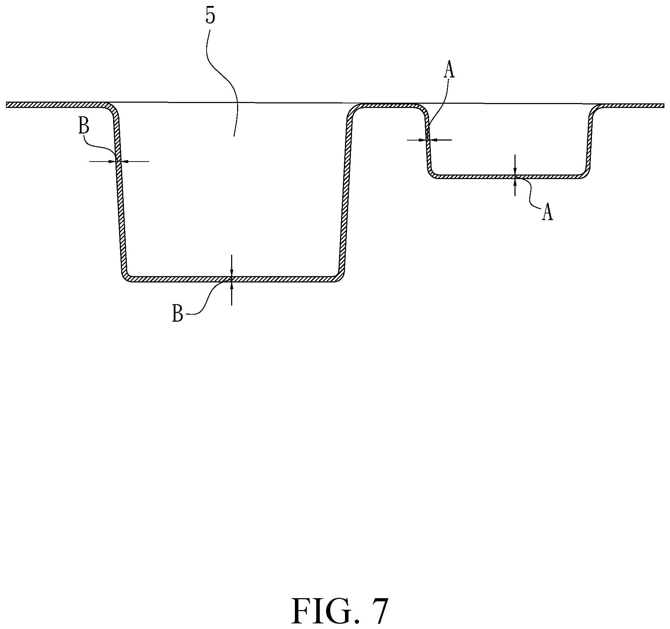

Referring to FIGS. 5-7, in a third embodiment, the forming process is applicable for a variety of molds 4. After an overturning forming machine drives a mold 4 to suck pulps and generate a wet blank 5, the PLC controls the mold 4 to rotate to a set angle, wherein a part of the wet blank 5 in the pulp tank 30 is sucked by a vacuum suction force 40 continuously to adhere with the plant-fiber pulps 3, and the plant fibers are intersected and staked so as to obtain a second thickness B. Then, the wet blank 5 is hot-press molded so as to obtain a first thickness A and the second thickness B thicker than the first thickness A, thus producing a finished paper-plastic product of different thicknesses. Preferably, the second thickness B facilitates a reinforcement of the finished paper-plastic product and is applicable for industrial packaging box.

Accordingly, the forming process of the present invention has advantages as follows:
1) The mold 1 is not changed or modified, for example, the second thickness of the wet blank 2 is pressed matingly by the upper mold and the lower mold, thus obtaining a high reinforcement by using the second thickness B.
2) In a pulp suction of the industrial packaging box at a tilted angle, the PLC is configured to control a pulp suction time precisely to obtain the predetermined thickness, and the mold 1 is not configured to adjust or classify the forming machine.
3) The forming machine is provided with the PLC to control the pulp suction time period difference of the mold 1, the rising speed for the mold to be separated from the pulp tank, or the angle difference of the mold 1, thus achieving different thicknesses of the wet blank 2. Also, the forming machine is not classified.

## Claims

1. A forming process capable of manufacturing paper-plastic products of different thicknesses being configured to suck pulps by using a forming machine, **characterized in that** a programmable logic controller (PLC) is used to control a mold (1) of the forming machine to suck plant-fiber pulps (3) in a pulp suction time period difference, when the mold (1) stays in a pulp tank (30), a rising speed for the mold (1) which is separated from the pulp tank (30), and a tilted angle difference of the mold (1), wherein plant fibers of the plant-fiber pulps (3) are intersected and stacked to achieve different thicknesses of a same wet blank (2) in different areas or portions of the same wet blank (2).

2. The forming process as claimed in claim 1, **characterized in that** the forming machine for pulp suction is a reciprocate molding machine or an overturning forming machine.

3. The forming process as claimed in claim 1, **characterized in that** after the forming machine drives the mold (1) to suck pulps and generate the wet blank (2), the PLC controls the mold (1) to lift slowly so that the wet blank (2) removed from the pulp tank (30) is sucked by a vacuum suction force (10) to contact with the mold (1) matingly, wherein a part of the wet blanks (2) removed from the pulp tank (30) is maintained in a predetermined thickness, and the other part of the wet blank (30) is sucked by the vacuum suction force (10), wherein the plant-fiber pulps (3) are sucked in a predetermined time; after finishing a pulp suction, the wet blank (2) has a first thickness (A) formed on the part thereof, and the wet blank (2) has a second thickness (B) formed in the other part thereof, wherein the second thickness (B) is thicker than the first thickness (A), the plant fibers of the plant-fiber pulps (3) are intersected and staked so as to obtain the second thickness (B); after a hot-press molding, the wet blank (2) has different thickness, and the different thickness are the first thickness (A) and the second thickness (B), wherein the second thickness (B) of the wet blank (2) facilitates a reinforcement of a finished paper-plastic product which is a cup, a product with a higher height and a deeper depth or the paper-plastic product with a reinforced end.

4. The forming process as claimed in claim 1, **characterized in that** after the forming machine drives the mold (1) to suck pulps and generate the wet blank (2), the PLC controls the mold (1) to lift and stop in a predetermined distance so that a part of the wet blank (2) not removed from the pulp tank (30) is sucked by a vacuum suction force (10) to adhere with the plant-fiber pulps (3), wherein the plant fibers of the plant-fiber pulps (3) are intersected and staked so as to obtain a second thickness (B); in a hot-press molding, the wet blank (2) is clamped by an upper mold and a lower mold so as to obtain two different thicknesses applicable for various paper-plastic products of a predetermined depth or height, wherein the various paper-plastic products are any one of a cup body, a cup lid, an egg tray, and an industrial packaging box.

5. The forming process as claimed in claim 2, **characterized in that** after the overturning forming machine drives the mold (4) to suck pulps and generate the wet blank (5), the PLC controls the mold (4) to rotate to a set angle, wherein a part of the wet blank (5) in the pulp tank (30) is sucked by a vacuum suction force (40) continuously to adhere with the plant-fiber pulps (3), and the plant fibers of the plant-fiber pulps (3) are intersected and staked so as to obtain a second thickness (B), then the wet blank (5) is hot-press molded so as to obtain a first thickness (A) and the second thickness (B) thicker than the first thickness (A), thus producing a finished paper-plastic product of different thicknesses, wherein the second thickness (B) facilitates a reinforcement of the finished paper-plastic product and is applicable for industrial packaging box.
